Europäisches Patentamt

European Patent Office

Office européen des brevets

(11) Veröffentlichungsnummer: **0 273 931 B1**

## (12) EUROPÄISCHE PATENTSCHRIFT

(45) Veröffentlichungstag der Patentschrift: **29.04.92**

(21) Anmeldenummer: **87904017.8**

(22) Anmeldetag: **30.06.87**

(86) Internationale Anmeldenummer:
**PCT/CH87/00079**

(87) Internationale Veröffentlichungsnummer:
**WO 88/00431 (28.01.88 88/03)**

(51) Int. Cl.⁵: **A01B 19/06**

### (54) VORRICHTUNG ZUR BODENBEARBEITUNG.

(30) Priorität: **10.07.86 DE 3623204**

(43) Veröffentlichungstag der Anmeldung:
**13.07.88 Patentblatt 88/28**

(45) Bekanntmachung des Hinweises auf die
Patenterteilung:
**29.04.92 Patentblatt 92/18**

(84) Benannte Vertragsstaaten:
**AT CH DE FR GB IT LI NL SE**

(56) Entgegenhaltungen:
**CH-A- 227 082
CH-A- 294 263
CH-A- 425 304
DE-B- 1 288 837
NL-A- 7 513 500**

(73) Patentinhaber: **BUCHER-GUYER AG Maschinenfabrik**

**CH-8166 Niederweningen/Zürich(CH)**

(72) Erfinder: **LEY, Carl J.
Baumschulenweg 22
W-5160 Düren(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zur Bodenbearbeitung nach dem Oberbegriff des Patentanspruches 1.

Derartige Vorrichtungen dienen der Aufbereitung von landwirtschaftlichen Feldern und werden auch zur Bearbeitung des Bodens beim Bau von Park- und Grünanlagen eingesetzt. Dabei entstehen durch den für eine solche Vorrichtung hochfrequentiert oszillierenden Bewegungsablauf schlagartig wirkende Kräfte, die sich vornehmlich an den Schwinghebeln, Lenkern, Führungen und Lagern durch Verschleisserscheinungen bemerkbar machen. Gleichzeitig entstehen im Betrieb dieser Geräte sich auf den Bedienenden auswirkende intensive Rüttelbewegungen, die eine hohe Anstrengung abverlangen.

In diesem Zusammenhang vermittelt u.a. die CH-A-227 082 eine Egge mit zwei quer zur Fortbewegungsrichtung schwingend angetriebenen, Eggenzähne aufweisenden Balken, bei welcher zwischen den Schwingen diese verbindende Stossfänger angeordnet sind.

Gemäss der CH-A-294 263 ist eine landwirtschaftliche Maschine mit einem an einem Tragbalken mittels Lenkern in Schwingungen versetzbarer Eggenbalken bekannt, der durch Zugfedern mit dem Tragbalken schwingungsdämpfend gekuppelt ist.

Durch die hohe Kadenz des Eggenbalkens werden die z.T. durch mehrere Teile gebildeten Dämpfungsvorrichtungen, insbesondere auch durch die unstabile Federführung einem hohen Verschleiss ausgesetzt.

Der Erfindung liegt die Aufgabe zugrunde, unter Beibehaltung der Arbeitsleistung, die Abnützung der dynamisch beanspruchten Teile um ein erhebliches Mass zu reduzieren und die sich auf die Trägermaschine auswirkenden Schwingungen weiter zu verringern.

Erfindungsgemäss wird diese Aufgabe dadurch gelöst dass an dem Querbalken mindestens zwei sich entgegengerichtete, auf wenigstens einen Lenker seitlich einwirkende, aus Gummi oder eine Gummilegierung gebildete Dämpfungselemente befestigt sind. Durch diese Ausgestaltung kann auf einfache Weise die zuvor erzielte Arbeitsqualität und Leistung erhalten werden.

Alternativ können die Dämpfungselemente an jeweils einer Seite wenigstens zweier Lenker angeordnet sein, wodurch sich der Einsatz der Dämpfungselemente wirtschaftlich bestimmen lässt. Günstig erweist es sich, wenn die Dämpfungselemente an dem dem Lenker zugekehrten Ende abgerundet sind.

Vorzugsweise sind die Lenker und die Dämpfungselemente im Bereich Aufstossstellen komplementär ausgebildet, sodass sie eine gerichtete Kraftübertragung gewährleisten.

Vorteilhaft weisen die Lenker an der Seite eine zur Zentrierung des Dämpfungselementes vorgesehene Vertiefung auf, in welche die Dämpfungselemente eintauchend angeordnet sind.

Alternativ eignen sich auch seitlich der Lenker angebrachte Abstützbleche, die mit einer Vertiefung versehen sind, sodass an den Lenkern keine zusätzlichen Vorkehrungen zu treffen sind bzw. diese nachträglich ergänzt werden können.

Besonders vorteilhaft ist es, wenn die Dämpfungselemente an den Supports verstell- und lösbar befestigt sind, sodass sie an die masslichen Abweichungen angepasst werden können.

Zweckmässigerweise sind die Dämpfungselemente näher zu der an dem an dem Querträger vorgesehenen Schwenkachse des Lenkers angeordnet, wodurch die Schlagwirkung und der Lärm erheblich reduziert werden können.

Weitere Einzelheiten und Vorteile der Erfindung ergeben sich aus der folgenden Beschreibung und der Zeichnung. Es zeigen:

Fig. 1.     eine isometrische Darstellung der erfindungsgemässen Vorrichtung,

Fig. 2.     eine Draufsicht auf die Vorrichtung nach Fig. 1 und

Fig. 3.     eine Ansicht gemäss Pfeil A in Fig. 2.

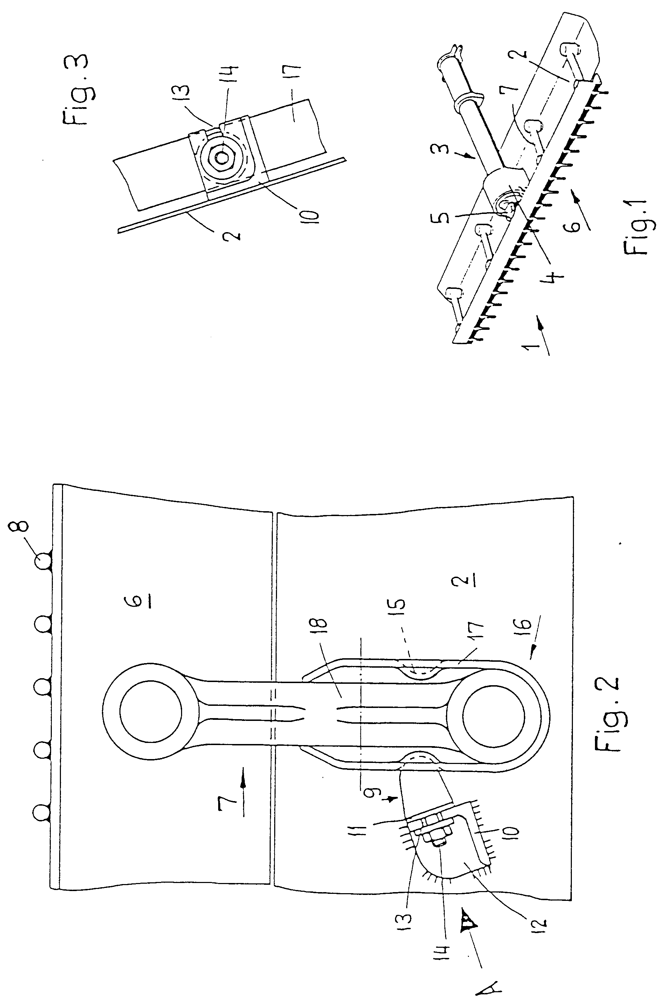

Eine in Fig. 1 dargestellte Vorrichtung zur Bodenbearbeitung 1 besitzt einen stationären Querbalken 2, auf welchem die frontseitig mit einem nicht dargestellten Einachstraktor verbindbare Antriebseinheit 3 befestigt ist. Zu dieser Antriebseinheit gehören ein Planetenradgetriebe 4, dessen Planetenrad mit einer Kurbelwelle (nicht ersichtlich) verbunden ist. Die konzentrisch zur Achse des Planetengetriebes 4 in einem Antriebskopf 5 am Bodenbearbeitungsorgan 6 lagernde Welle der Kurbelwelle erzeugt die oszillierenden Hin- und Herbewegungen des an Lenkern 7 geführten Bodenbearbeitungsorgans 6. Letzteres ist winkelförmig ausgebildet und der nach oben ragende Schenkel weist an der Frontseite nach unten vorstehende Zinken 8 auf. Der horizontale Schenkel des Bodenbearbeitungsorgans 6 bildet mit seiner Unterseite eine mit der Auflagefläche des Querträgers 2 fluchtende Ebene. Selbstverständlich könnte diese Vorrichtung zur Bodenbearbeitung 1 auch seitlich oder am Heck oder an der Front eines Zweiachstraktors befestigt und es können auch andere eggenähnliche Bodenbearbeitungsgeräte damit versehen werden.

Fig. 2 veranschaulicht die Anordnungsweise zwischen Lenker 7 und einem Dämpfungselement 9, welches an dem stationärem Querbalken 2 mittels angeschweisstem Support 10 befestigt ist. Bei dem dargestellten Dämpfungselement 9 handelt es sich um ein pufferähnliches Gebilde aus Gummi oder dgl., das mit einer Grundplatte 11, vornehmlich aus Metall fest verbunden ist und mit seinem nachgiebigen Dämpfungsende wenigstens annähernd an dem Lenker 7 mittel- oder unmittelbar anliegt. Der von einem Winkeleisen und einer Befestigungsplatte 12 gebildete Support 10 ist mit einem vertikalen, nach oben hin offenen Schlitz 13 versehen, der von dem von der Grundplatte 11 des Dämpfungselementes 9 abstehenden Gewindebolzen 14 durchsetzt wird, und der der einstell- und lösbaren Befestigung mittels Unterlagsscheibe und Mutter dient. Das freie Ende des Dämpfungselementes 9 liegt zumindest annähernd in einer komplementär ausgebildeten Vertiefung 15 eines das Schwenklager 16 des Lenkers 7 umgebenden Abdeckbleches 17. Selbstverständlich wäre es möglich, den Lenker 7 mit einer eigenen Vertiefung zu versehen. Die Vertiefung 15 am Abstützblech 17 könnte beispielsweise durch eine spannlose Verformung beidseits oder nur auf einer Seite hergestellt werden, je nach dem für ein Abstützblech 17 zwei oder nur ein Dämpfungselement 9 vorgesehen sind. Das feste Anbringen des Abstützelementes 17 erfolgt mittels dem mit strichpunktierter Linie 18 angedeuteten Spannelement oder einem anderen Verbindungselement.

Wie schon eingangs erwähnt, können an einem oder an allen Lenkern 7 auf beiden Seiten Dämpfungselemente 9 angeordnet werden; alternativ ist es möglich die Dämpfungselemente 9 an den benachbarten Seiten zweier Lenker oder an den Aussenseiten zweier Lenker 7 anzubringen.

Fig. 3. zeigt in einer Seitenansicht die Befestigungsanordnung des Dämpfungselementes in Pfeilrichtung A gemäss Fig. 2

## Patentansprüche

1.  Vorrichtung zur Bodenbearbeitung, mit einem von einem Fahrantrieb über eine zu bearbeitende Bodenoberfläche hinwegführbaren und mit dieser in Eingriff bringbaren und mittels Lenkern um senkrechte Achsen in quer zur Fortbewegungsrichtung gerichtete Schwingungen versetzbaren Bodenbearbeitungsorgan, das an einen nach hinten versetzten stationären Querbalken gekuppelt ist, dadurch gekennzeichnet, dass an dem Querbalken (2) mindestens zwei sich entgegengerichtete, auf wenigstens einen Lenker (7) seitlich einwirkende, aus Gummi oder einer Gummilegierung gebildete Dämpfungselemente (9) befestigt sind.

2.  Vorrichtung nach Anspruch 1, dadurch gekennzeichnet, dass an jeweils einer Seite wenigstens zweier Lenker (7) Dämpfungselemente (9) angeordnet sind.

3.  Vorrichtung nach einem der Ansprüche 1 und 2, dadurch gekennzeichnet, dass die Dämpfungselemente (9) an dem beaufschlagbaren Ende abgerundet sind.

4.  Vorrichtung nach einem der Ansprüche 1 bis 3, dadurch gekennzeichnet, dass die Lenker (7) und die Dämpfungselemente (9) im Bereich ihrer Aufstossstellen komplementär ausgebildet sind.

5.  Vorrichtung nach Anspruch 4, dadurch gekennzeichnet, dass die Lenker (7) an der Seite eine zur Zentrierung des Dämpfungselementes (9) vorgesehene Vertiefung (15) aufweisen.

6.  Vorrichtung nach Anspruch 5, dadurch gekennzeichnet, dass die Vertiefung (15) an seitlich der Lenker (7) angebrachten Abstützblechen (17) vorgesehen sind.

7.  Vorrichtung nach einem der Ansprüche 1 bis 6, dadurch gekennzeichnet, dass die Dämpfungselemente (9) an Supports (10) verstell- und lösbar befestigt sind.

8.  Vorrichtung nach einem der Ansprüche 1 bis 7, dadurch gekennzeichnet, dass die Dämpfungselemente (9) näher zu der an dem Querträger (2) vorgesehenen Schwenkachse des Lenkers (7) angeordnet sind.

## Claims

1.  A cultivation device, with a cultivation member which is able to be guided by means of a drive over a surface of ground which is to be cultivated and is able to be brought into engagement therewith and which by means of guide rods about vertical axes is able to be set in oscillations directed transversely to the direction of movement, which cultivation member is coupled to a rearwardly offset stationary transverse beam, characterised in that there are attached to the transverse beam (2) at least two damping elements (9) which are arranged in opposite directions with respect to each other, act laterally on at least one guide rod (7) and are formed from rubber or from a rubber composition.

2. A device according to Claim 1, characterised in that damping elements (9) are arranged on one side in each case of at least two guide rods (7).

3. A device according to one of Claims 1 and 2, characterised in that the damping elements (9) are rounded off on the end which is to be acted upon.

4. A device according to one of Claims 1 to 3, characterised in that the guide rods (7) and the damping elements (9) are constructed so as to be complementary in the region of their contact points.

5. A device according to Claim 4, characterised in that the guide rods (7) have on the side a depression (15) which is provided for the centering of the damping element (9).

6. A device according to Claim 5, characterised in that the depressions (15) are provided on support sheets (17) which are arranged to the side of the guide rods (7).

7. A device according to one of Claims 1 to 6, characterised in that the damping elements (9) are adjustably and detachably secured to supports (10).

8. A device according to one of Claims 1 to 7, characterised in that the damping elements (9) are arranged closer to the swivel axis of the guide rod (9) provided on the transverse support (2).

**Revendications**

1. Dispositif pour le travail du sol, comprenant un organe de travail du sol qui peut être guidé par un mécanisme de roulement par-dessus une surface de sol à travailler et amené en prise avec celle-ci, qui peut être déplacé au moyen de biellettes autour d'axes verticaux selon des oscillations dirigées transversalement par rapport à la direction du déplacement et qui est accouplé à une poutre transversale fixe décalée vers l'arrière, caractérisé par le fait que sont fixés à la poutre transversale (2) au moins deux éléments amortisseurs (9) opposés l'un à l'autre qui agissent latéralement sur au moins une biellette (7) et qui sont constitués par du caoutchouc ou par un composé de caoutchouc.

2. Dispositif selon la revendication 1, caractérisé par le fait que des éléments amortisseurs (9) sont disposés à chaque fois sur un côté d'au moins deux biellettes (7).

3. Dispositif selon l'une des revendications 1 et 2, caractérisé par le fait que les éléments amortisseurs (9) sont arrondis à leur extrémité d'impact.

4. Dispositif selon l'une des revendications 1 à 3, caractérisé par le fait que les biellettes (7) et les éléments amortisseurs (9) sont réalisés de manière complémentaire dans la région de leurs endroits où ils se rencontrent.

5. Dispositif selon la revendication 4, caractérisé par le fait que les biellettes (7) présentent sur le côté un renfoncement (15) prévu pour le centrage de l'élément amortisseur (9).

6. Dispositif selon la revendication 5, caractérisé par le fait que les renfoncements (15) sont prévus sur des tôles d'appui (17) qui sont montées sur le côté des biellettes (7).

7. Dispositif selon l'une des revendications 1 à 6, caractérisé par le fait que les éléments amortisseurs (9) sont fixés à des supports (10) de manière amovible et en pouvant être déplacés.

8. Dispositif selon l'une des revendications 1 à 7, caractérisé par le fait que les éléments amortisseurs (9) sont disposés plus près de celui des axes de pivotement de la biellette (7) qui est prévu sur la poutre transversale (2).

Fig.3

Fig.1

Fig.2